(19) **Europäisches Patentamt / European Patent Office / Office européen des brevets**

(11) **EP 4 518 226 A1**

(12) **EUROPEAN PATENT APPLICATION**
published in accordance with Art. 153(4) EPC

(43) Date of publication:
05.03.2025 Bulletin 2025/10

(21) Application number: 23796834.2

(22) Date of filing: 27.04.2023

(51) International Patent Classification (IPC):
*H04L 5/00* (2006.01)　　　*H04W 72/23* (2023.01)
*H04W 72/12* (2023.01)　　*H04W 72/04* (2023.01)
*H04W 16/14* (2009.01)

(52) Cooperative Patent Classification (CPC):
H04L 5/00; H04W 16/14; H04W 72/04;
H04W 72/12; H04W 72/23

(86) International application number:
PCT/KR2023/005769

(87) International publication number:
WO 2023/211192 (02.11.2023 Gazette 2023/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.04.2022 KR 20220051988

(71) Applicant: LG Electronics Inc.
Yeongdeungpo-gu
Seoul 07336 (KR)

(72) Inventors:
• YANG, Suckchel
  Seoul 06772 (KR)
• KIM, Jaehyung
  Seoul 06772 (KR)
• CHOI, Seunghwan
  Seoul 06772 (KR)
• KIM, Seonwook
  Seoul 06772 (KR)

(74) Representative: Plasseraud IP
104 Rue de Richelieu
CS92104
75080 Paris Cedex 02 (FR)

(54) **METHOD AND DEVICE FOR TRANSMITTING OR RECEIVING SIGNAL IN WIRELESS COMMUNICATION SYSTEM**

(57) According to at least one of various embodiments of the present invention, a terminal may: receive a first reference signal for first wireless communication; and receive a physical downlink control channel (PDCCH) for the first wireless communication on the basis of the first reference signal, wherein, on the basis that the first reference signal and a second reference signal for second wireless communication overlap with each other on at least one symbol in a time domain, the interval in a frequency domain between resource elements (REs) to which the first reference signal is mapped on the overlapping at least one symbol may be changed from a first RE interval to a second RE interval.

**FIG. 9**

Description

## TECHNICAL FIELD

The present disclosure relates to a wireless communication system, and more particularly, to a method and apparatus for transmitting or receiving a downlink/uplink radio signal in a wireless communication system.

## BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

## DISCLOSURE

## TECHNICAL PROBLEM

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

## TECHNICAL SOLUTION

In an aspect of the present disclosure, provided herein is a method of receiving signals by a user equipment (UE) in a wireless communication system supporting first wireless communication and second wireless communication. The method may include: receiving a first reference signal (RS) for the first wireless communication; and receiving a physical downlink control channel (PDCCH) for the first wireless communication based on the first RS. Based on that the first RS overlaps with a second RS for the second wireless communication in at least one symbol in a time domain, a frequency domain interval between resource elements (REs) to which the first RS is mapped may be changed from a first RE interval to a second RE interval in the at least one overlapping symbol.

The first wireless communication may be wireless communication based on 3rd Generation Partnership Project (3GPP) New Radio (NR), and the second wireless communication may be wireless communication based on 3GPP Long Term Evolution (LTE).

The first RS may be a 3GPP NR demodulation reference signal (DMRS) for the PDCCH, and the second reference signal may be a 3GPP LTE cell-specific signal (CRS).

The second RE interval may be a 3-RE interval or a 6-RE interval.

The first RE interval may be a 4-RE interval.

The second RE interval may be determined based on a frequency domain interval between REs to which the second RS is mapped.

The second RE interval may be an integer multiple of a frequency domain interval between REs to which the second RS is mapped.

In the at least one overlapping symbol, the REs to which the first RS is mapped may be different from REs to which the second RS is mapped.

In symbols in which the first RS and the second RS do not overlap, the first RS may be mapped at the first RE interval in a frequency domain.

In another aspect of the present disclosure, provided herein is a processor-readable recording medium having recorded thereon a program for performing the method described above.

In another aspect of the present disclosure, provided herein is a UE configured to perform the method described above.

In another aspect of the present disclosure, provided herein is a device configured to control a UE performing the method described above.

In another aspect of the present disclosure, provided herein is a method of transmitting signals by a base station (BS) in a wireless communication system supporting first wireless communication and second wireless communication. The method may include: transmitting a PDCCH for the first wireless communication; and transmitting a first RS for the PDCCH. Based on that the first RS overlaps with a second RS for the second wireless communication in at least one symbol in a time domain, a frequency domain interval between REs to which the first RS is mapped may be changed from a first RE interval to a second RE interval in the at least one overlapping symbol.

In a further aspect of the present disclosure, provided herein is a BS configured to perform the method described above.

## ADVANTAGEOUS EFFECTS

According to at least one of various embodiments wireless signal transmission/reception procedures can be performed efficiently.

It will be appreciated by persons skilled in the art that the technical effects that could be achieved with the present disclosure are not limited to what has been particularly described hereinabove and the above and other technical effects that the present disclosure could achieve will be more clearly understood from the following detailed description.

## BRIEF DESCRIPTION OF THE DRAWINGS

FIG. 1 illustrates physical channels used in a 3rd generation partnership project (3GPP) system as an exemplary wireless communication system, and a general signal transmission method using the same;
FIG. 2 illustrates a radio frame structure;
FIG. 3 illustrates a resource grid of a slot;
FIG. 4 illustrates exemplary mapping of physical channels in a slot;
FIG. 5 illustrates an exemplary acknowledgment/negative acknowledgment (ACK/NACK) transmission process;
FIG. 6 illustrates an exemplary physical uplink shared channel (PUSCH) transmission process;
FIG. 7 illustrates an example of multiplexing control information in a PUSCH;
FIG. 8 is a diagram for explaining Long Term Evolution (LTE) LTE cell-specific signal (CRS) transmission;
FIG. 9 illustrates an example of a method by which a user equipment (UE) receives a signal;
FIG. 10 illustrates an example of a method by which a base station (BS) transmits a signal;
FIGS. 11 to 14 illustrate a communication system 1 and wireless devices applicable to the present disclosure; and
FIG. 15 illustrates a discontinuous reception (DRX) operation applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration," and both may be used interchangeably. Further, a conditional expression (e.g., "if", "in a case", or "when") may be replaced by "based on that" or "in a state/status." In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent disclosure or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

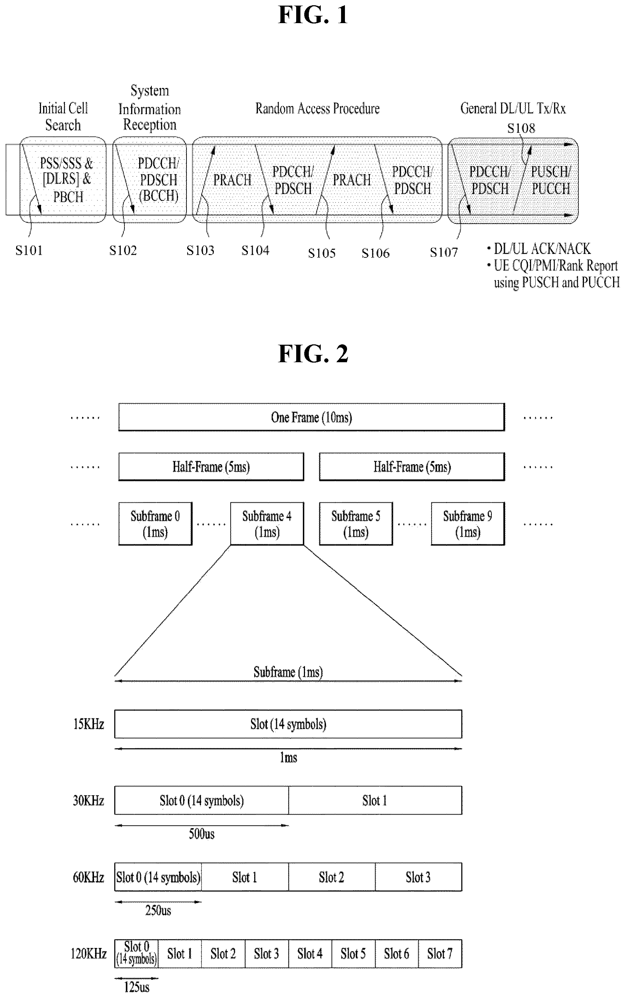

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

The purpose of the random access procedure (RACH procedure) is not limited to initial network access (e.g., S103 to S106). That is, the random access procedure may be used for various purposes. For example, the random access procedure may be used for at least one of an RRC connection re-establishment procedure, handover, UE-triggered UL data transmission, transition from RRC_INACTIVE, SCell time alignment, system information request, beam failure recovery, or UL resource request. However, the random access procedure is not limited thereto. The UE may acquire UL synchronization and/or UL transmission resources from the random access procedure. The random access procedure may be divided into 1) a contention-based random access procedure and 2) a contention-free random access procedure.

1) Contention-based random access (CBRA) is divided into 4-step CBRA and 2-step CBRA. The 4-step CBRA may be referred to as Type 1, and the 2-step CBRA may be referred to as Type 2.

- First, the 4-step CBRA will be described. The UE may transmit message 1 (Msg1) including a preamble related to a specific sequence over a PRACH and receive message 2 (Msg2) including a random access response (RAR) over a PDCCH and a PDSCH related thereto. The UE may transmit message 3 (Msg3) over a PUSCH based on scheduling information in the RAR. The UE may receive message 4 (Msg4) including contention resolution information for a collision resolution procedure from the BS.

- Next, the 2-step CBRA will be described. Transmission of Msg1 and Msg3 in the 4-step CBRA may be replaced with transmission of one message: message A (MsgA) including a PRACH and a PUSCH in the 2-step CBRA. Specifically, MsgA may include a PRACH preamble in Msg1 and data in Msg3. In addition, transmission of Msg2 and Msg4 in the 4-step CBRA procedure may be replaced with transmission of one message: message B (MsgB) including an RAR of the BS and contention resolution information in the 2-step CBRA. Specifically, MsgB may include an RAR in Msg2 and contention resolution information in Msg4.

2) Contention-free random access (CFRA) may be performed when the UE is handed over to another cell or another BS or when requested by a command from the BS. The basic steps of the CFRA are similar to those of the CBRA. However, in the CFRA, the BS may explicitly indicate to the UE a dedicated random access preamble to be used by the UE, unlike the CBRA where the UE autonomously selects a preamble to be used from among a plurality of random access preambles. Information on the dedicated random access preamble may be included in an RRC message (e.g., handover command) or provided to the UE via a PDCCH order. When the random access procedure is initiated, the UE transmits the dedicated random access preamble to the BS. When the UE receives an RAR from the BS, the random access procedure may be completed.

The CBRA may be referred to as CB-RACH, and the CFRA may be referred to as CF-RACH.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a slot<br>* $N^{frame,u}_{slot}$: Number of slots in a frame<br>* $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

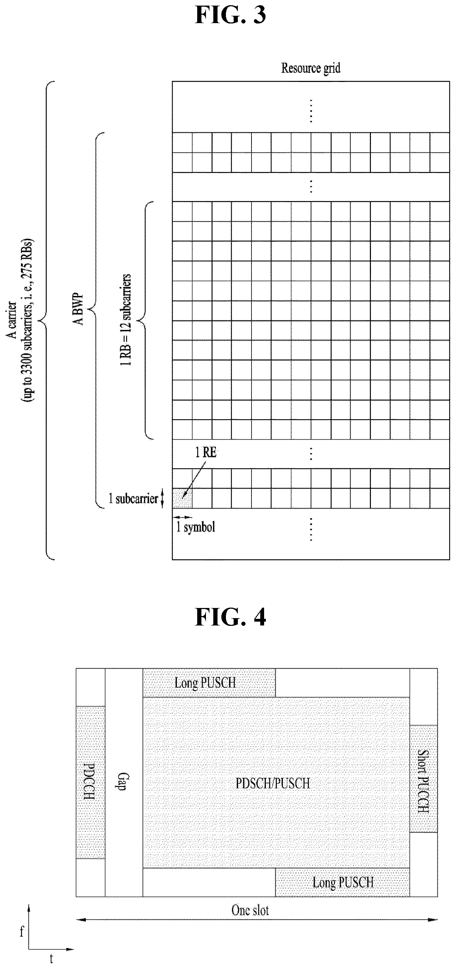

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured by higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters

- controlResourceSetId: A CORESET related to an SS
- monitoringSlotPeriodicityAndOffset: A PDCCH monitoring periodicity (in slots) and a PDCCH monitoring offset (in slots)
- monitoringSymbolsWithinSlot: PDCCH monitoring symbols in a slot (e.g., the first symbol(s) of a CORESET)
- nrofCandidates: The number of PDCCH candidates (one of 0, 1, 2, 3, 4, 5, 6, and 8) for each AL={ 1, 2, 4, 8, 16}

\* An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |

(continued)

| Type | Search Space | RNTI | Use Case |
|---|---|---|---|
| Type 1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of one or multiple PUSCH in one cell, or indicating downlink feedback information for configured grant PUSCH (CG-DFI) |
| 0_2 | Scheduling of PUSCH in one cell |
| 1_0 | Scheduling of PDSCH in one cell |
| 1_1 | Scheduling of PDSCH in one cell, and/or triggering one shot HARQ-ACK codebook feedback |
| 1_2 | Scheduling of PDSCH in one cell |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

- SR (Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM symbols $N_{symb}^{PUCCH}$ | Number of bits | Usage | Etc |
|---|---|---|---|---|
| 0 | 1-2 | $\leq 2$ | HARQ, SR | Sequence selection |
| 1 | 4 - 14 | $\leq 2$ | HARQ, [SR] | Sequence modulation |
| 2 | 1-2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration. PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

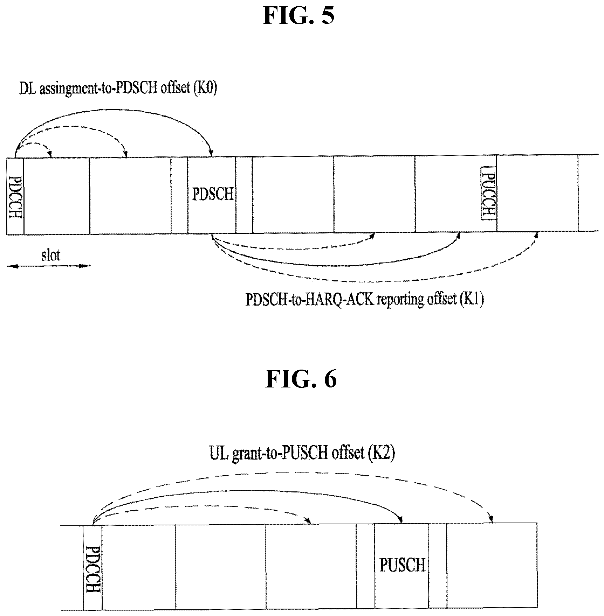

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

- Frequency domain resource assignment: Indicates an RB set assigned to a PDSCH
- Time domain resource assignment: Indicates K0 and the starting position (e.g., OFDM symbol index) and length (e.g.,

the number of OFDM symbols) of the PDSCH in a slot.

- PDSCH-to-HARQ_feedback timing indicator: Indicates K1.
- HARQ process number (4 bits): Indicates the HARQ process ID of data (e.g., a PDSCH or TB).

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information

- Frequency domain resource assignment: Indicates an RB set assigned to the PUSCH
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

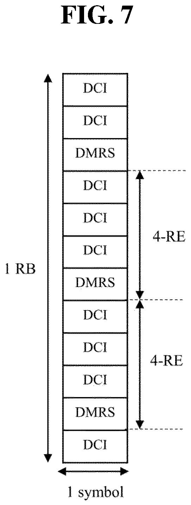

FIG. 7 is a diagram illustrating NR PDCCH and DMRS mapping. For the sake of convenience, FIG. 7 shows mapping of a NR PDCCH and a DMRS by extracting one RB and one symbol. Referring to FIG. 7, the DMRS for the NR PDCCH may be arranged with an interval of four REs in the frequency domain. For example, the DMRS may be mapped to one RE placed every four REs.

## Configuration of Control Resources and DMRS Resources for PDCCH Transmission

In future scenarios of dynamic spectrum sharing (DSS) between NR and LTE (or LTE-NR coexistence), Rel-18 may consider a method of transmitting/receiving a NR PDCCH in symbols for LTE cell-specific reference signal (CRS) transmission (based on the justification outlined below) to improve the resource utilization and PDCCH capacity for enhancement of NR PDCCH transmission performance.

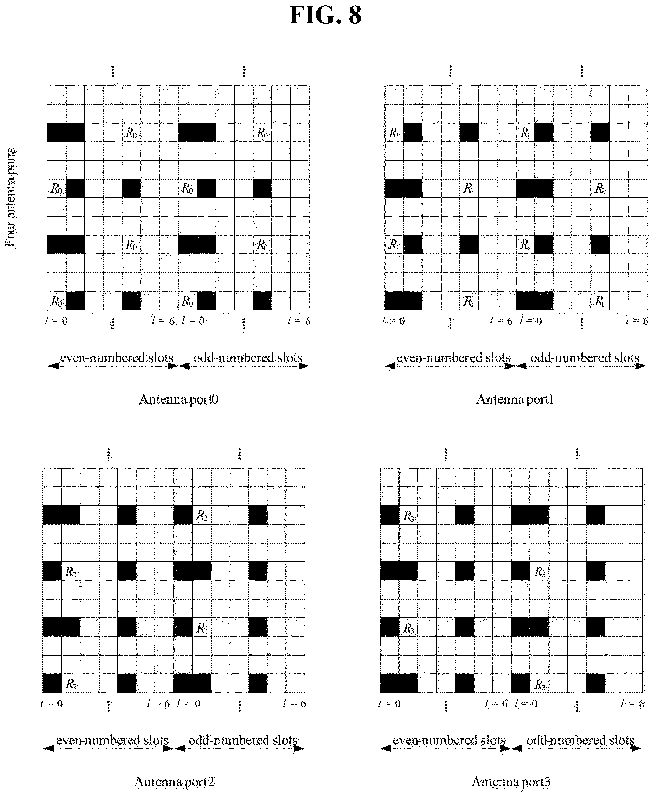

Before explaining DSS, LTE CRS transmission will be described in brief with reference to FIG. 8. A CRS is an RS transmitted cell-specifically and is transmitted every subframe over a wideband. The CRS may be transmitted for 1, 2, or (up to) 4 antenna ports, depending on the number of transmission antennas at the BS. For example, if the BS has 2 transmission antennas, the CRS is transmitted for antenna ports R0 and R1, and if there are 4 antennas, the CRS is transmitted for antenna ports R0 to R3.

Since LTE UEs are likely to exist for a long time, DSS is important. Especially, in scenarios where NR traffic starts with very low traffic volumes, performance improvement may be expected.

The NR PDCCH may become a bottleneck in DSS, and the situation may worsen as NR traffic increases. According to the current 3GPP specifications, in a cell with 4 LTE CRS ports, no NR PDCCH symbols are allowed within the first 3 symbols of a slot. To improve the resource utilization and increase the NR PDCCH capacity for DSS, it may be beneficial to allow NR PDCCH transmission/reception in symbols that overlap with the LTE CRS.

Thus, a method for configuring control resources and DMRS resources for effective NR PDCCH transmission in a DSS scenario (where NR PDCCH transmission/reception is performed in LTE CRS transmission symbols) is proposed.

## [1] Configuration of control/DMRS REs for NR PDCCH in LTE CRS transmission symbols.

1) Proposal 1

A. When symbols/RBs included in a CORESET for NR PDCCH transmission overlap with LTE CRS transmission symbols/RBs (when a search space (SS) set associated with the CORESET is configured), a NR PDCCH signal (e.g., REG) on the LTE CRS transmission symbols/RBs may be configured with only control REs without DMRS REs, unlike the conventional REG configuration.

   i. The control REs (included in the REG) may be configured/mapped to remaining REs except for CRS REs on the LTE CRS symbols/RBs.
   ii. The number of control REs (included in the REG) may be 10 for the 1-port CRS per { 1-symbol x 1-RB} and 8 for the 2/4-port CRS.
   iii. The CORESET (and associated SS set) may need to be configured to include at least one (non-CRS) symbol (without LTE CRS transmission) for channel estimation of the control REs on the LTE CRS symbol (through interpolation).

2) Proposal 2

A. When symbols/RBs included in a CORESET for NR PDCCH transmission overlap with LTE CRS transmission symbols/RBs (when an SS set associated with the CORESET is configured), a NR PDCCH signal (e.g., REG) on the LTE CRS transmission symbols/RBs may be configured by omitting control/DMRS REs that overlap with CRS REs in the existing REG configuration.

   i. The REG (on the CRS symbols/RBs) may be configured by omitting either 1 control RE and 1 DMRS RE or 2 control REs for the 1-port CRS (in the existing REG configuration).
   ii. The REG (on the CRS symbols/RBs) may be configured by omitting 3 control REs and 1 DMRS RE for the 2/4-port CRS (in the existing REG configuration).
   iii. The positions of the DMRS REs may be shifted differently (for example, by 2 REs) between (multiple) CRS symbols included in the CORESET (and associated SS set) or between CRS symbols and non-CRS symbols.
   iv. Considering the channel estimation performance (based on interpolation), if the CORESET (SS set) consists of multiple CRS symbols (for example, 2 symbols), Proposal 1 may be applied to some CRS symbols, while Proposal 2 may be applied to the remaining CRS symbols.
   v. Alternatively, if the CORESET (SS set) is configured to include at least one non-CRS symbol, Proposal 1 may be applied. If the CORESET (SS set) is configured with only CRS symbols, Proposal 2 may be applied.
   vi. Alternatively, (considering the channel conditions of the UE), the BS may determine whether to apply Proposal 1 or Proposal 2 to configure the (NR PDCCH) REG on the CRS symbols in the CORESET (SS set) and then inform the UE of the determination.

3) Proposal 3

A. When symbols/RBs included in a CORESET for NR PDCCH transmission overlap with LTE CRS transmission symbols/RBs (when an SS set associated with the CORESET is configured), a NR PDCCH signal (e.g., REG) on the LTE CRS transmission symbols/RBs may be configured by changing the interval between adjacent DMRS REs to 3 REs or 6 REs, unlike the existing REG configuration.

    i. The BS may configure for the UE the interval between adjacent DMRS REs within the REG (for example, whether the interval is 3 REs or 6 REs (or whether the interval remain the same as the existing 4-RE interval).
    ii. To control/avoid collisions between DMRS REs and CRS REs, the BS may configure the DMRS RE mapping (start) position within the RBs for the UE.
    iii. If the interval between adjacent DMRS REs within the REG is 3 REs, the REG may be configured with 4 DMRS REs and 6 control REs for the 1-port CRS, and the REG may be configured with 4 DMRS REs and 4 control REs for the 2/4-port CRS.
    iv. If the interval between adjacent DMRS REs within the REG is 6 REs, the REG may be configured with 2 DMRS REs and 8 control REs for the 1-port CRS, and the REG may be configured with 2 DMRS REs and 6 control REs for the 2/4-port CRS.
    v. The REG (where the interval between adjacent DMRS REs is 3 REs or 6 REs as described above) may be configured only on CRS symbols/RBs within the CORESET (SS set) (using the existing REG configuration (where the interval between adjacent DMRS REs is 4 REs) on non-CRS symbols/RBs)). Alternatively, the REG may be configured on all symbols/RBs within the CORESET (SS set), including the CRS symbols/RBs.
    vi. If the CORESET (and associated SS set) consists of multiple CRS symbols (for example, 2 symbols), Proposal 1 may be applied to some CRS symbols, while Proposal 3 may be applied to the remaining CRS symbols.
    vii. Alternatively, if the CORESET (SS set) is configured to include at least one non-CRS symbol, Proposal 1 may be applied. If the CORESET (SS set) is configured with only CRS symbols, Proposal 3 may be applied.
    viii. Alternatively, (considering the channel conditions of the UE), the BS may determine whether to apply Proposal 1 or Proposal 3 to configure the (NR PDCCH) REG on the CRS symbols in the CORESET (SS set) and then inform the UE of the determination.

**[2] NR PDCHH Transmission/Reception Operation in LTE CRD Transmission Symbols**

1) Operation 1

A. When symbols/RBs included in a CORESET for NR PDCCH transmission overlap with LTE CRS transmission symbols/RBs (when an SS set associated with the CORESET is configured), for a specific NR PDCCH candidate (the number of REGs or the number of DMRS REs and/or control REs), if the number of REGs overlapping with the LTE CRS symbols/RBs or the number of DMRS REs (and/or control REs) overlapping with CRS REs is below a specific threshold (e.g., X%), the UE may perform monitoring (decoding) by assuming that the NR PDCCH candidate is valid.

    i. If the number of REGs overlapping with the LTE CRS symbols/RBs or the number of DMRS REs (and/or control REs) overlapping with the CRS REs exceeds the specific threshold in this situation, the UE may not perform monitoring (decoding) under the assumption that the PDCCH candidate is invalid.

B. As another method, when symbols/RBs included in a CORESET for NR PDCCH transmission (partially) overlap with LTE CRS transmission symbols/RBs (when an SS set associated with the CORESET is configured), for a specific NR PDCCH candidate (the number of REGs or the number of DMRS REs and/or control REs), if the number of REGs overlapping with the LTE CRS symbols/RBs or the number of DMRS REs (and/or control REs) overlapping with CRS REs is below a specific threshold (e.g., X%), the UE may perform monitoring (decoding) under the assumption that a PDCCH candidate signal is actually mapped/configured using only the remaining REGs except for REGs that overlap with the LTE CRS symbols/RBs among REGs belonging to the NR PDCCH candidate.

    i. If the number of REGs overlapping with the LTE CRS symbols/RBs or the number of DMRS REs (and/or control REs) overlapping with the CRS REs exceeds the specific threshold in this situation, the UE may perform monitoring (decoding) under the assumption that the PDCCH candidate signal is mapped/configured using all REGs (including the REGs overlapping with the LTE CRS symbols/RBs).

Operation 2

A. When symbols/RBs included in a CORESET for NR PDCCH transmission overlap with LTE CRS transmission symbols/RBs (when an SS set associated with the CORESET is configured), if the number of times of blind decoding (BD)/CCE channel estimation exceeds the maximum number of times of BD/CCE channel estimation that the UE is capable of performing at a specific time (e.g., slot), the UE may prioritize skipping (dropping) monitoring for the SS set (that overlaps with the LTE CRS symbols/RBs) over other SS sets that do not overlap with the LTE CRS symbols/RBs. B. Additionally, when symbols/RBs included in a CORESET for NR PDCCH transmission (partially) overlap with LTE CRS transmission symbols/RBs (when an SS set associated with the CORESET is configured), if the pre-coder granularity applied to the NR PDCCH transmission is set to a contiguous RB set (rather than a REG bundle size), the UE may receive the NR PDCCH under the assumption that an RB where LTE CRS transmission is performed is not contiguous with an RB where LTE CRS transmission is not performed (even though the RBs are contiguous in terms of RB index) (from the perspective of pre-coder application) (thus, it is assumed that independent pre-coders are applied to the two RBs).

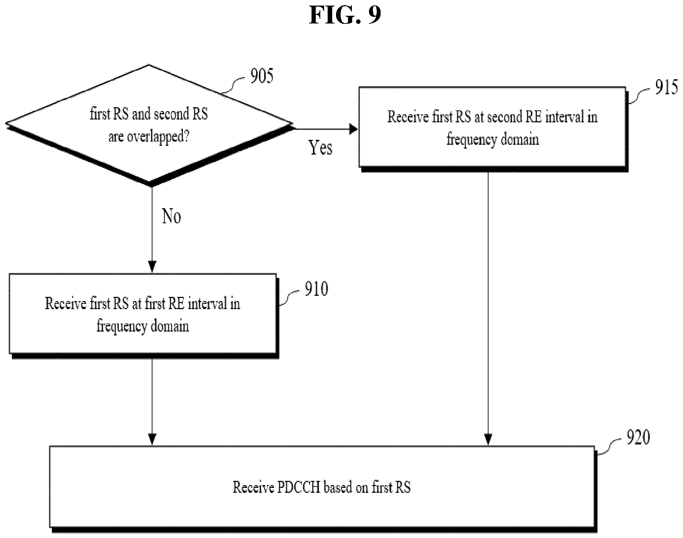

FIG. 9 illustrates a flow of a method by which a UE receives a signal in a wireless communication system that supports both first wireless communication and second wireless communication according to an embodiment.
In FIG. 9, the first wireless communication may be 3GPP NR based wireless communication, and the second wireless communication may be 3GPP LTE based wireless communication. A first RS may be a 3GPP NR DMRS for a PDCCH, and a second RS may be a 3GPP LTE CRS.
The frequency domain interval between REs to which the first RS is mapped may be determined based on whether the first RS and the second RS for the second wireless communication overlap in at least one symbol in the time domain (905).
Based on that the first RS and the second RS for the second wireless communication overlap in at least one symbol in the time domain, the frequency domain interval between the REs to which the first RS is mapped may be changed from a first RE interval to a second RE interval.
If the first RS and the second RS do not overlap, the first RS may be mapped at the first RE interval in the frequency domain.
For example, if the first RS and the second RS for the second wireless communication overlap in at least one symbol in the time domain, the second RE interval may be applied to a CORESET and/or SS set including the at least one overlapping symbol. The first RE interval may be applied to a CORESET/SS set including no overlapping symbols.
Alternatively, if the first RS and the second RS for the second wireless communication overlap in at least one symbol in the time domain, the second RE interval may be applied to the at least one overlapping symbol. On the other hand, the first RE interval may be applied to non-overlapping symbols.
Accordingly, the UE may receive the first RS for the first wireless communication (910 and 915).
The UE may receive the PDCCH for the first wireless communication based on the first RS (920).
The second RE interval may be a 3-RE interval or a 6-RE interval.
The first RE interval may be a 4-RE interval.
The second RE interval may be determined based on the frequency domain interval between REs to which the second RS is mapped.
The second RE interval may be an integer multiple of the frequency domain interval between the REs to which the second RS is mapped.
In the at least one overlapping symbol or the CORESET/SS set that includes the at least one overlapping symbol, the REs to which the first RS is mapped may be different from the REs to which the second RS is mapped.

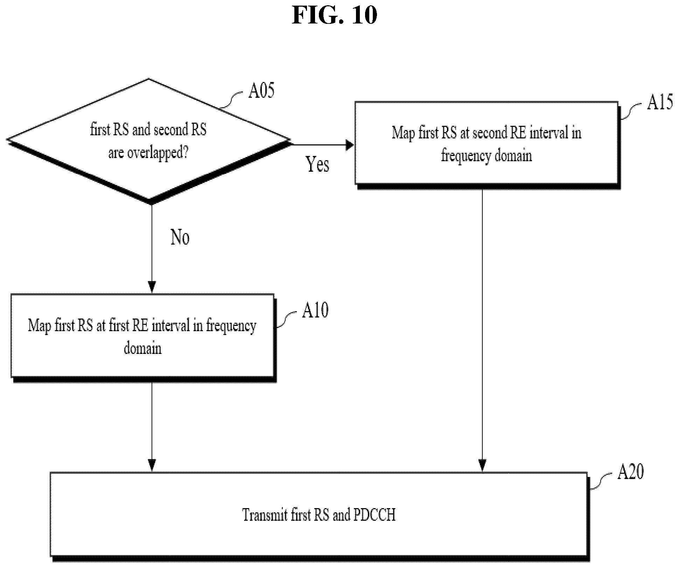

FIG. 10 illustrates a flow of a method by which a BS receives a signal in a wireless communication system that supports both first wireless communication and second wireless communication according to an embodiment.
In FIG. 10, the first wireless communication may be 3GPP NR based wireless communication, and the second wireless communication may be 3GPP LTE based wireless communication. A first RS may be a 3GPP NR DMRS for a PDCCH, and a second RS may be a 3GPP LTE CRS.
The frequency domain interval between REs to which the first RS is mapped may be determined based on whether the first RS and the second RS for the second wireless communication overlap in at least one symbol in the time domain (A05).
Based on that the first RS and the second RS for the second wireless communication overlap in at least one symbol in the time domain, the frequency domain interval between the REs to which the first RS is mapped may be a second RE interval (A15).

If the first RS and the second RS do not overlap, the first RS may be mapped at the first RE interval in the frequency domain (A10).

For example, if the first RS and the second RS for the second wireless communication overlap in at least one symbol in the time domain, the second RE interval may be applied to a CORESET and/or SS set including the at least one overlapping symbol. The first RE interval may be applied to a CORESET/SS set including no overlapping symbols.

Alternatively, if the first RS and the second RS for the second wireless communication overlap in at least one symbol in the time domain, the second RE interval may be applied to the at least one overlapping symbol. On the other hand, the first RE interval may be applied to non-overlapping symbols.

Accordingly, the BS may transmit a PDCCH and the first RS for the PDCCH (A20).

The second RE interval may be a 3-RE interval or a 6-RE interval.

The first RE interval may be a 4-RE interval.

The second RE interval may be determined based on the frequency domain interval between REs to which the second RS is mapped.

The second RE interval may be an integer multiple of the frequency domain interval between the REs to which the second RS is mapped.

In the at least one overlapping symbol or the CORESET/SS set that includes the at least one overlapping symbol, the REs to which the first RS is mapped may be different from the REs to which the second RS is mapped.

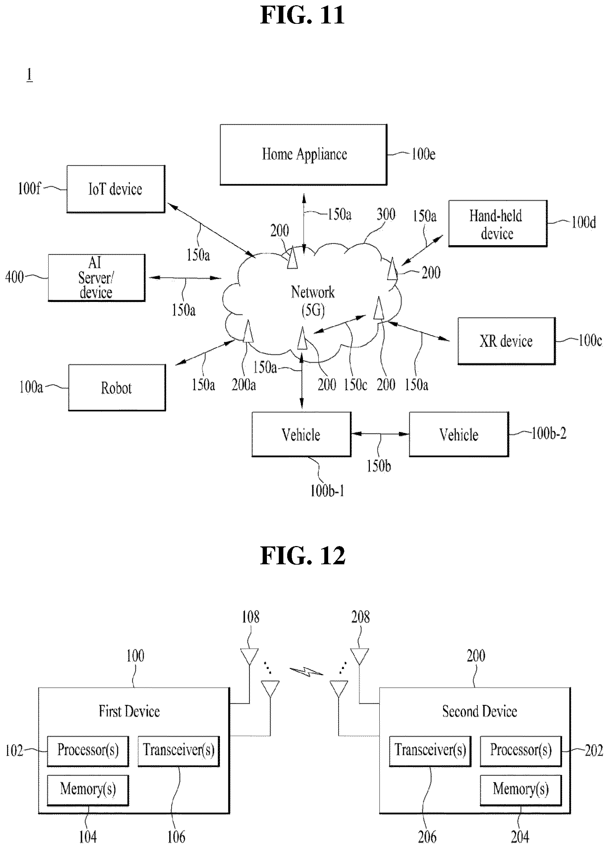

FIG. 11 illustrates a communication system 1 applied to the present disclosure.

Referring to FIG. 11, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 12 illustrates wireless devices applicable to the present disclosure.

Referring to FIG. 12, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 11.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

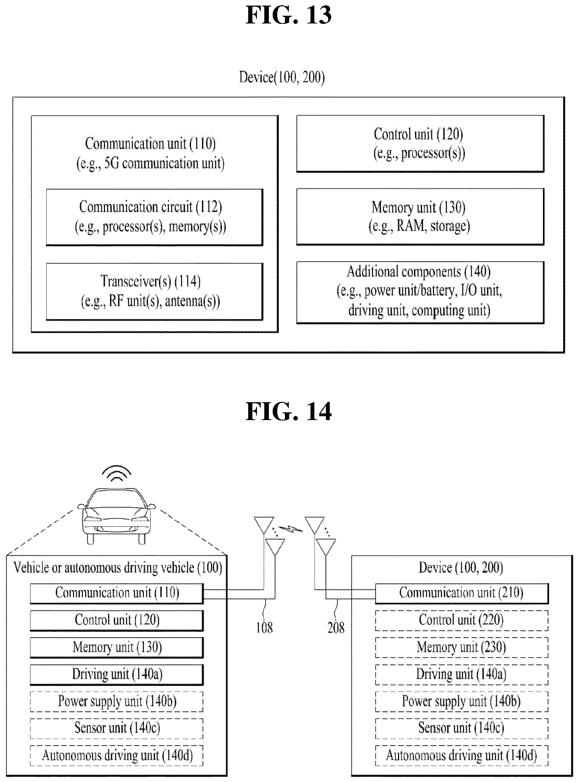

FIG. 13 illustrates another example of a wireless device applied to the present disclosure. The wireless device may be implemented in various forms according to a use-case/service (refer to FIG. 11).

Referring to FIG. 13, wireless devices 100 and 200 may correspond to the wireless devices 100 and 200 of FIG. 12 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 12. For example, the transceiver(s) 114 may include the one or more transceivers 106 and 206 and/or the one or more antennas 108 and 208 of FIG. 12. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 11), the vehicles (100b-1 and 100b-2 of FIG. 11), the XR device (100c of FIG. 11), the hand-held device (100d of FIG. 11), the home appliance (100e of FIG. 11), the IoT device (100f of FIG. 11), a digital broadcast terminal, a hologram device, a public safety device, an MTC device, a medicine device, a fintech device (or a finance device), a security device, a climate/environment device, the AI server/device (400 of FIG. 11), the BSs (200 of FIG. 11), a network node, etc. The wireless device may be used in a mobile or fixed place according to a use-example/service.

In FIG. 13, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 14 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 14, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 13, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

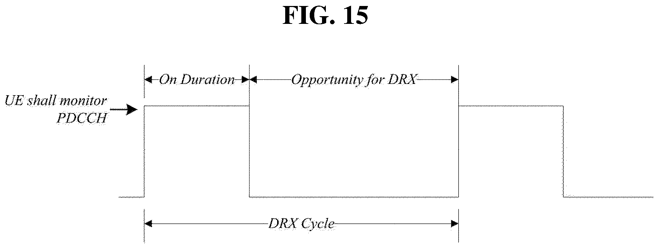

FIG. 15 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 15, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the present disclosure. Irrespective of whether DRX is configured, PDCCH monitoring may be restricted during a time period configured as a measurement gap.

Table 6 describes a DRX operation of a UE (in the RRC_CONNECTED state). Referring to Table 6, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

[Table 6]

|  | Type of signals | UE procedure |
|---|---|---|
| 1st step | RRC signalling(MAC-CellGroupConfig) | - Receive DRX configuration information |
| 2nd Step | MAC CE((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.

- Value of drx-OnDurationTimer: defines the duration of the starting period of the DRX cycle
- Value of drx-InactivityTimer: defines the duration of a time period during which the UE is awake after a PDCCH occasion in which a PDCCH indicating initial UL or DL data has been detected
- Value of drx-HARQ-RTT-TimerDL: defines the duration of a maximum time period until a DL retransmission is received after reception of a DL initial transmission
- Value of drx-HARQ-RTT-TimerDL: defines the duration of a maximum time period until a grant for a UL retransmission is received after reception of a grant for a UL initial transmission
- drx-LongCycleStartOffset: defines the duration and starting time of a DRX cycle
- drx-ShortCycle (optional): defines the duration of a short DRX cycle

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

The above-described embodiments correspond to combinations of elements and features of the present disclosure in prescribed forms. And, the respective elements or features may be considered as selective unless they are explicitly mentioned. Each of the elements or features may be implemented in a form failing to be combined with other elements or features. Moreover, it is able to implement an embodiment of the present disclosure by combining elements and/or features together in part. A sequence of operations explained for each embodiment of the present disclosure may be modified. Some configurations or features of one embodiment may be included in another embodiment or may be substituted for corresponding configurations or features of another embodiment. And, it is apparently understandable that an embodiment is configured by combining claims failing to have relation of explicit citation in the appended claims together or may be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## INDUSTRIAL APPLICABILITY

The present disclosure is applicable to UEs, BSs, or other apparatuses in a wireless mobile communication system.

## Claims

1. A method of receiving signals by a user equipment (UE) in a wireless communication system supporting first wireless communication and second wireless communication, the method comprising:

   receiving a first reference signal (RS) for the first wireless communication; and
   receiving a physical downlink control channel (PDCCH) for the first wireless communication based on the first RS, wherein based on that the first RS overlaps with a second RS for the second wireless communication in at least one symbol in a time domain, a frequency domain interval between resource elements (REs) to which the first RS is mapped is changed from a first RE interval to a second RE interval in the at least one overlapping symbol.

2. The method of claim 1, wherein the first wireless communication is wireless communication based on 3rd Generation Partnership Project (3GPP) New Radio (NR), and

wherein the second wireless communication is wireless communication based on 3GPP Long Term Evolution (LTE).

3. The method of claim 2, wherein the first RS is a 3GPP NR demodulation reference signal (DMRS) for the PDCCH, and wherein the second reference signal is a 3GPP LTE cell-specific signal (CRS).

4. The method of claim 1, wherein the second RE interval is a 3-RE interval or a 6-RE interval.

5. The method of claim 4, wherein the first RE interval is a 4-RE interval.

6. The method of claim 1, wherein the second RE interval is determined based on a frequency domain interval between REs to which the second RS is mapped.

7. The method of claim 1, wherein the second RE interval is an integer multiple of a frequency domain interval between REs to which the second RS is mapped.

8. The method of claim 1, wherein in the at least one overlapping symbol, the REs to which the first RS is mapped are different from REs to which the second RS is mapped.

9. The method of claim 1, wherein in symbols in which the first RS and the second RS do not overlap, the first RS is mapped at the first RE interval in a frequency domain.

10. A computer-readable recording medium having recorded thereon a program for performing the method of claim 1.

11. A device configured to operate in a wireless communication system supporting first wireless communication and second wireless communication, the device comprising:

   a memory configured to store instructions; and
   a processor configured to perform operations by executing the instructions,
   wherein the operations of the processor comprise:

   receiving a first reference signal (RS) for the first wireless communication; and
   receiving a physical downlink control channel (PDCCH) for the first wireless communication based on the first RS,
   wherein based on that the first RS overlaps with a second RS for the second wireless communication in at least one symbol in a time domain, a frequency domain interval between resource elements (REs) to which the first RS is mapped is changed from a first RE interval to a second RE interval in the at least one overlapping symbol.

12. The device of claim 11, further comprising:

   a transceiver configured to transmit or receive wireless signals under control of the processor,
   wherein the device is a user equipment (UE) in a wireless communication system.

13. The device of claim 11, wherein the device is an application specific integrated circuit (ASIC) or a digital signal processor configured to control a user equipment (UE).

14. A method of transmitting signals by a base station (BS) in a wireless communication system supporting first wireless communication and second wireless communication, the method comprising:

   transmitting a physical downlink control channel (PDCCH) for the first wireless communication; and
   transmitting a first reference signal (RS) for the PDCCH,
   wherein based on that the first RS overlaps with a second RS for the second wireless communication in at least one symbol in a time domain, a frequency domain interval between resource elements (REs) to which the first RS is mapped is changed from a first RE interval to a second RE interval in the at least one overlapping symbol.

15. A base station (BS) configured to operate in a wireless communication system supporting first wireless communication and second wireless communication, the BS comprising:

a transceiver; and

a processor configured to control the transceiver to transmit a physical downlink control channel (PDCCH) for the first wireless communication, and to transmit a first reference signal (RS) for the PDCCH,

wherein based on that the first RS overlaps with a second RS for the second wireless communication in at least one symbol in a time domain, a frequency domain interval between resource elements (REs) to which the first RS is mapped is changed from a first RE interval to a second RE interval in the at least one overlapping symbol.

# FIG. 1

Initial Cell Search — PSS/SSS & [DLRS] & PBCH — S101

System Information Reception — PDCCH/ PDSCH (BCCH) — S102

Random Access Procedure — PRACH — S103 — PDCCH/ PDSCH — S104 — PRACH — S105 — PDCCH/ PDSCH — S106

General DL/UL Tx/Rx — S108 — PDCCH/ PDSCH — S107 — PUSCH/ PUCCH

• DL/UL ACK/NACK
• UE CQI/PMI/Rank Report using PUSCH and PUCCH

# FIG. 2

One Frame (10ms)

Half-Frame (5ms) — Half-Frame (5ms)

Subframe 0 (1ms) — Subframe 4 (1ms) — Subframe 5 (1ms) — Subframe 9 (1ms)

Subframe (1ms)

15KHz — Slot (14 symbols) — 1ms

30KHz — Slot 0 (14 symbols) — Slot 1 — 500us

60KHz — Slot 0 (14 symbols) — Slot 1 — Slot 2 — Slot 3 — 250us

120KHz — Slot 0 (14 symbols) — Slot 1 — Slot 2 — Slot 3 — Slot 4 — Slot 5 — Slot 6 — Slot 7 — 125us

# FIG. 3

Resource grid

A carrier
(up to 3300 subcarriers, i. e., 275 RBs)

A BWP

1 RB = 12 subcarriers

1 RE

1 subcarrier

1 symbol

# FIG. 4

PDCCH

Gap

Long PUSCH

PDSCH/PUSCH

Short PUCCH

Long PUSCH

One slot

f

t

# FIG. 5

DL assingment-to-PDSCH offset (K0)

| PDCCH | | | | PDSCH | | | | | PUCCH | |

← slot →

PDSCH-to-HARQ-ACK reporting offset (K1)

# FIG. 6

UL grant-to-PUSCH offset (K2)

| PDCCH | | | | | PUSCH | | |

# FIG. 7

# FIG. 8

Antenna port0

Antenna port1

Antenna port2

Antenna port3

# FIG. 9

# FIG. 10

A05
first RS and second RS
are overlapped?

Yes

A15
Map first RS at second RE interval in
frequency domain

No

A10
Map first RS at first RE interval in frequency
domain

A20
Transmit first RS and PDCCH

# FIG. 11

1

# FIG. 12

# FIG. 13

Device(100, 200)

| | |
|---|---|
| Communication unit (110)<br>(e.g., 5G communication unit) | Control unit (120)<br>(e.g., processor(s)) |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 14

Vehicle or autonomous driving vehicle (100)

| |
|---|
| Communication unit (110) |
| Control unit (120) |
| Memory unit (130) |
| Driving unit (140a) |
| Power supply unit (140b) |
| Sensor unit (140c) |
| Autonomous driving unit (140d) |

108    208

Device (100, 200)

| |
|---|
| Communication unit (210) |
| Control unit (220) |
| Memory unit (230) |
| Driving unit (140a) |
| Power supply unit (140b) |
| Sensor unit (140c) |
| Autonomous driving unit (140d) |

# FIG. 15

<table>
<tr><td colspan="2" align="center">**INTERNATIONAL SEARCH REPORT**</td><td colspan="2">International application No.<br><br>**PCT/KR2023/005769**</td></tr>
</table>

| A. | CLASSIFICATION OF SUBJECT MATTER |
|---|---|
| | **H04L 5/00**(2006.01)i; **H04W 72/23**(2023.01)i; **H04W 72/12**(2009.01)i; **H04W 72/04**(2009.01)i; **H04W 16/14**(2009.01)i |

According to International Patent Classification (IPC) or to both national classification and IPC

| B. | FIELDS SEARCHED |
|---|---|

Minimum documentation searched (classification system followed by classification symbols)

H04L 5/00(2006.01); H04B 7/15(2006.01); H04J 11/00(2006.01); H04W 72/08(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 참조 신호(reference signal), 중첩(overlap), 심볼(symbol), 주파수 도메인(frequency domain), RE(resource element), CRS(cell-specific reference signal), DMRS(demodulate reference signal)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| Y | KR 10-2021-0030945 A (QUALCOMM INCORPORATED) 18 March 2021 (2021-03-18)<br>See paragraphs [0028]-[0030], [0040] and [0104]; and claims 1 and 3. | 1-15 |
| Y | WO 2018-201986 A1 (VIVO MOBILE COMMUNICATION CO., LTD.) 08 November 2018 (2018-11-08)<br>See page 14, lines 21-26; and claims 1 and 8. | 1-15 |
| A | KR 10-2013-0045400 A (ALCATEL LUCENT) 03 May 2013 (2013-05-03)<br>See paragraphs [0021]-[0039]. | 1-15 |
| A | KR 10-2020-0037242 A (PANASONIC INTELLECTUAL PROPERTY CORPORATION OF AMERICA) 08 April 2020 (2020-04-08)<br>See paragraphs [0132]-[0138]. | 1-15 |
| A | US 2020-0022186 A1 (QUALCOMM INCORPORATED) 16 January 2020 (2020-01-16)<br>See paragraphs [0056]-[0069]. | 1-15 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 July 2023** | **31 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/005769**

| Patent document cited in search report | | | Publication date (day/month/year) | Patent family member(s) | | | Publication date (day/month/year) |
|---|---|---|---|---|---|---|---|
| KR | 10-2021-0030945 | A | 18 March 2021 | CN | 112534761 | A | 19 March 2021 |
| | | | | EP | 3831001 | A1 | 09 June 2021 |
| | | | | TW | 202008819 | A | 16 February 2020 |
| | | | | US | 11672027 | B2 | 06 June 2023 |
| | | | | US | 2020-0045750 | A1 | 06 February 2020 |
| | | | | WO | 2020-027981 | A1 | 06 February 2020 |
| WO | 2018-201986 | A1 | 08 November 2018 | CN | 108809570 | A | 13 November 2018 |
| | | | | CN | 108809570 | B | 17 April 2020 |
| KR | 10-2013-0045400 | A | 03 May 2013 | CN | 103141052 | A | 05 June 2013 |
| | | | | CN | 103141052 | B | 23 March 2016 |
| | | | | EP | 2609709 | A1 | 03 July 2013 |
| | | | | EP | 2609709 | B1 | 16 November 2016 |
| | | | | JP | 2013-536653 | A | 19 September 2013 |
| | | | | JP | 5501530 | B2 | 21 May 2014 |
| | | | | US | 2012-0051404 | A1 | 01 March 2012 |
| | | | | US | 8842620 | B2 | 23 September 2014 |
| | | | | WO | 2012-027189 | A1 | 01 March 2012 |
| KR | 10-2020-0037242 | A | 08 April 2020 | AU | 2017-426866 | A1 | 06 February 2020 |
| | | | | AU | 2017-426866 | B2 | 11 May 2023 |
| | | | | BR | 112020001065 | A2 | 14 July 2020 |
| | | | | CN | 110999165 | A | 10 April 2020 |
| | | | | CN | 110999165 | B | 28 June 2022 |
| | | | | CN | 115361105 | A | 18 November 2022 |
| | | | | EP | 3665820 | A1 | 17 June 2020 |
| | | | | EP | 3665820 | A4 | 22 July 2020 |
| | | | | JP | 2020-529755 | A | 08 October 2020 |
| | | | | JP | 7114640 | B2 | 08 August 2022 |
| | | | | RU | 2736626 | C1 | 19 November 2020 |
| | | | | US | 11026222 | B2 | 01 June 2021 |
| | | | | US | 11570768 | B2 | 31 January 2023 |
| | | | | US | 2020-0178222 | A1 | 04 June 2020 |
| | | | | US | 2021-0266883 | A1 | 26 August 2021 |
| | | | | US | 2023-0146761 | A1 | 11 May 2023 |
| | | | | WO | 2019-028717 | A1 | 14 February 2019 |
| | | | | WO | 2019-028717 | A8 | 07 March 2019 |
| | | | | ZA | 202000724 | B | 25 August 2021 |
| US | 2020-0022186 | A1 | 16 January 2020 | CN | 110637437 | A | 31 December 2019 |
| | | | | CN | 110637437 | B | 01 March 2022 |
| | | | | EP | 3622652 | A1 | 18 March 2020 |
| | | | | US | 10455619 | B2 | 22 October 2019 |
| | | | | US | 11006454 | B2 | 11 May 2021 |
| | | | | US | 2018-0332619 | A1 | 15 November 2018 |
| | | | | WO | 2018-208797 | A1 | 15 November 2018 |

Form PCT/ISA/210 (patent family annex) (July 2022)